(19) Europäisches Patentamt
European Patent Office
Office européen des brevets

(11) **EP 2 086 073 A1**

(12) **EUROPEAN PATENT APPLICATION**
published in accordance with Art. 153(4) EPC

(43) Date of publication:
**05.08.2009 Bulletin 2009/32**

(51) Int Cl.:
***H01S 3/10*** *(2006.01)*

(21) Application number: **07806200.7**

(22) Date of filing: **29.08.2007**

(86) International application number:
**PCT/JP2007/066723**

(87) International publication number:
**WO 2008/090644 (31.07.2008 Gazette 2008/31)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **22.01.2007 JP 2007011458**
**07.02.2007 JP 2007027709**

(71) Applicant: **Central Glass Company, Limited Yamaguchi 755-0001 (JP)**

(72) Inventor: **The designation of the inventor has not yet been filed**

(74) Representative: **Manitz, Finsterwald & Partner GbR**
**Martin-Greif-Strasse 1**
**80336 München (DE)**

(54) **LIGHT SOURCE DEVICE**

(57)     A first light source device using a transition element-doped optical waveguide as a light emitter, which is **characterized in that** a light output end and an excitation light source to excite the transition element-doped optical waveguide are connected to one end of the transition element-doped optical waveguide through an optocoupler and a reflector is connected to the other end of the transition element-doped optical waveguide through a variable attenuator, thereby changing a coherence length of light that is output from the light output end, is provided.

**FIG.2**

EP 2 086 073 A1

## Description

### TECHNICAL FIELD

The present invention relates to a method of controlling a coherence length and to a light source device using the control method.

### BACKGROUND OF THE INVENTION

In recent years, dramatic progress has been made in technology in measurement, medical and biotechnological fields. Requirement for the light source used in these fields have diversified accordingly.

As the light source, there are lamp, various lasers, diode and so on. Although these light sources will become increasingly differentiated according to their characteristics, as a trend in recent years, the need for a light source with high radiance has been increasing. It can be said that this is connected with the fact that the light source is being used in a more microscopic field.

As the light source having the high radiance, the laser, especially a semiconductor laser which can be used readily is often used. However, although a height of coherence unique to the laser is a valuable feature, in some utilization, for example, for an image display device or an illumination optical device, it is an unwelcome feature. An invention in which a speckle appearing due to the high coherence is removed has been proposed (Patent Document 1, Patent Document 2).

There is also a semiconductor light source (LED, SLD) which is not the laser light, namely that the coherence is relatively low. However, the radiance is not enough, and a band of wavelength is limited to an infrared region.

With respect to the coherence, findings concerning the laser light are already presented (Non Patent Document 1). In general, by observing interference fringes of a target light by Michelson interferometer, a coherence length L can be determined. Further, it is also known that this coherence length L is almost represented by the following expression 1.

$$\text{L = c / } \Delta\nu \text{ (here, c: speed of light, } \Delta\nu \text{: line width)}$$

$$\cdots \text{ expression 1}$$

Furthermore, when wavelengths that indicate a half-power in light spectrum are $\lambda_1$, $\lambda_2$ ($\lambda_1 < \lambda_2$), the expression 1 is also represented by the following expression 2.

$$\text{L = } \lambda_1 \cdot \lambda_2 \text{ / } (\lambda_2 - \lambda_1) \qquad \cdots \text{ expression 2}$$

And this suggests that control of the coherence length is possible through control of the light spectrum. In the expression 2, ($\lambda_2 - \lambda_1$) is a full width at half maximum (FWHM).

In an ASE (Amplified Spontaneous Emission) light source of the light source devices using a transition element-doped optical waveguide as a light emitter, a spontaneous emission light component and a component that is amplified by stimulated emission are mixed. In particular, in a case of a high power ASE light source, since the stimulated emission component is large, it is conceivable that the relationship between the light spectrum and the coherence length mentioned above can be used as a gauge.

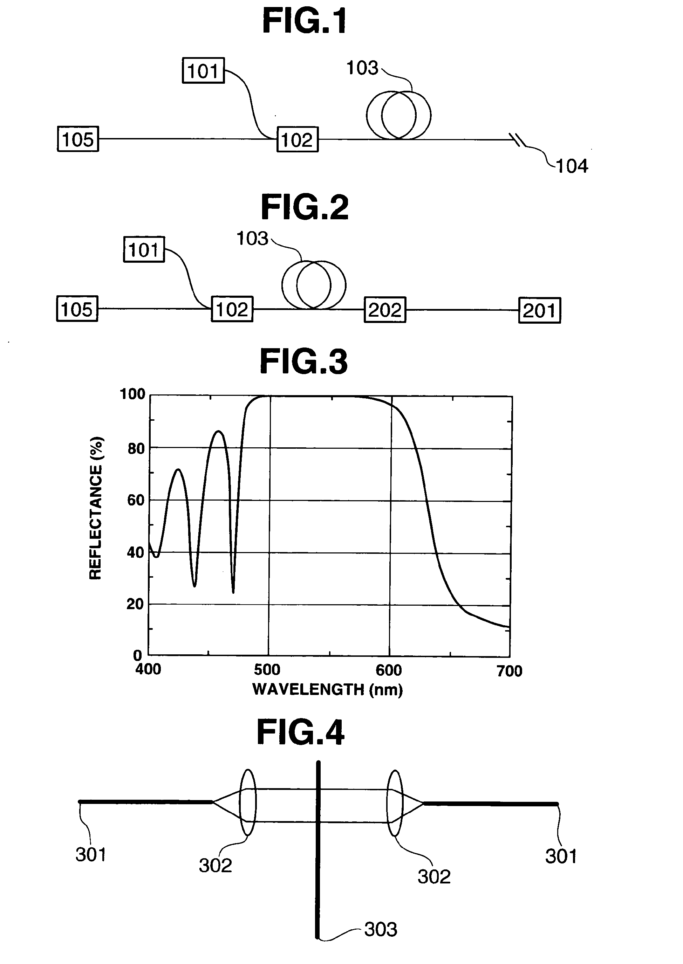

The light source device using the transition element-doped optical waveguide as the light emitter is mainly formed from, for example as shown in Fig. 1, an excitation light source 101, an optocoupler 102, a transition element-doped optical waveguide 103, an output end 105, and a nonreflective end 104. The excitation light source 101 is the light source for activating the transition element inside the transition element-doped optical waveguide 103. The optocoupler 102 is the optocoupler that leads excitation light which is output from the excitation light source 101 into the transition element-doped optical waveguide 103 and leads the light from the transition element-doped optical waveguide 103 to the output end 105. The transition element-doped optical waveguide 103 is used as the light emitter, and a rare earth element-doped optical fiber is often used as the transition element-doped optical waveguide 103 so far. The nonreflective end 104 is the nonreflective end that is treated so that the light, produced in the transition element-doped optical waveguide 103 and propagated to the nonreflective end 104, does not return to the transition element-doped optical waveguide 103 again. In such light source device, an output light spectrum is determined according to the transition element-doped optical waveguide and excitation power etc. used in the light source. However, the control of the light spectrum for the purpose of controlling the coherence length is not performed.

There are proposals for the light source device using an optical waveguide in which the rare earth element is doped as the transition element (Patent Document 3, Patent Document 4, Patent Document 5). These proposals are the proposals for an increase of output power, and the control of the light spectrum for controlling the coherence length is not taken into account.

In addition, an incoherent light source whose line width is narrow, and which is incoherent compared with the laser, using a narrow-band reflector, has been invented (Patent Document 6). However, in a case where a common fiber Bragg grating (FBG) is used, since the line width is on the order of an angstrom, the light spectrum shows a sharp peak, and the coherence length may be shorter than the laser, but it is considered to be not enough. When comparing this with a coherence length of a general wide-band light source etc., it can be said that the coherence length is long. In a case of this manner, also because a bandwidth of the common FBG is narrower than resolution of a light spectrum analyzer in general use, it is not enough as a method for obtaining an easily controllable spectrum. Furthermore, there is no proposal for the control of the coherence length.

Further, an active control of the coherence length in the light source device using the transition element-doped optical waveguide as the light emitter has not been proposed so far.

Here, it is possible for the rare earth element as the transition element to obtain light of various wavelengths, and also its combination has been presented in Non Patent Documents 2, 3. And chromium as the transition element is used for a ruby laser etc..

Patent Document 1: Japanese Patent Application *Kokai* Publication No. 2001-189520
Patent Document 2: Japanese Patent Application *Kokai* Publication No. 11-312631
Patent Document 3: Japanese Patent Application *Kokai* Publication No. 2001-111145
Patent Document 4: Japanese Patent Application *Kokai* Publication No. 2002-329907
Patent Document 5: Japanese Patent Application *Kokai* Publication No. 2003-133621
Patent Document 6: Patent No. 3312930
Non Patent Document 1: Hiroyoshi OTAKE, The directions for Laser and the precautions, The Optronics Co., Ltd., P33
Non Patent Document 2: Michel J. F. Digonnet, Rare-Earth-Doped Fiber Lasers and Amplifiers, Maecel Dekker, Inc, P18
Non Patent Document 3: Michel J. F. Digonnet, Rare-Earth-Doped Fiber Lasers and Amplifiers, Maecel Dekker, Inc, P171-242

## SUMMARY OF THE INVENTION

The active control of the coherence length in the light source device using the transition element-doped optical waveguide as the light emitter has not been proposed so far.

It is an obj ect of the present invention to provide a light source device which is capable of controlling the coherence length of an output light without changing the transition element-doped optical waveguide in the light source device using the transition element-doped optical waveguide as the light emitter.

According to a first feature of the present invention, a first light source device using a transition element-doped optical waveguide as a light emitter, which is **characterized in that** a light output end and an excitation light source to excite the transition element-doped optical waveguide are connected to one end of the transition element-doped optical waveguide through an optocoupler and a reflector is connected to the other end of the transition element-doped optical waveguide through a variable attenuator, thereby changing a coherence length of light that is output from the light output end, is provided.

According to a second feature of the present invention, a second light source device using a transition element-doped optical waveguide as a light emitter, which is **characterized in that** a light output end and an excitation light source to excite the transition element-doped optical waveguide are connected to one end of the transition element-doped optical waveguide through an optocoupler and a reflector is connected to the other end of the transition element-doped optical waveguide, thereby changing a shape of a light emission spectrum of the transition element-doped optical waveguide, is provided.

## BRIEF DESCRIPTION OF THE DRAWINGS

[Fig.1] a conventional light source device
[Fig.2] one embodiment of a light source device according to a first feature of the present invention
[Fig.3] reflection spectrum of a reflector used in an embodiment 1
[Fig.4] structure of a variable attenuator used in the embodiment 1

[Fig. 5] a light source device according to a second feature of the present invention

[Fig.6] reflection spectrum of a reflector used in an embodiment 2

[Fig.7] an output light spectrum (broken line) obtained in the embodiment 2 and an output light spectrum (solid line) obtained in a comparative example 1

[Fig.8A] an output light spectrum obtained in an embodiment 3

[Fig.8B] an output light spectrum obtained in the comparative example 1

[Fig.9] an output light spectrum (broken line) obtained in an embodiment 4 and an output light spectrum (solid line) obtained in the comparative example 1, and an output light spectrum (dashed line) obtained in the embodiment 2

[Fig.10] a structural diagram of an embodiment 5

[Fig.11] a structural diagram of a variable reflector used in the embodiment 5

[Fig.12] an output light spectrum obtained in the embodiment 5 (reflectance = 100%)

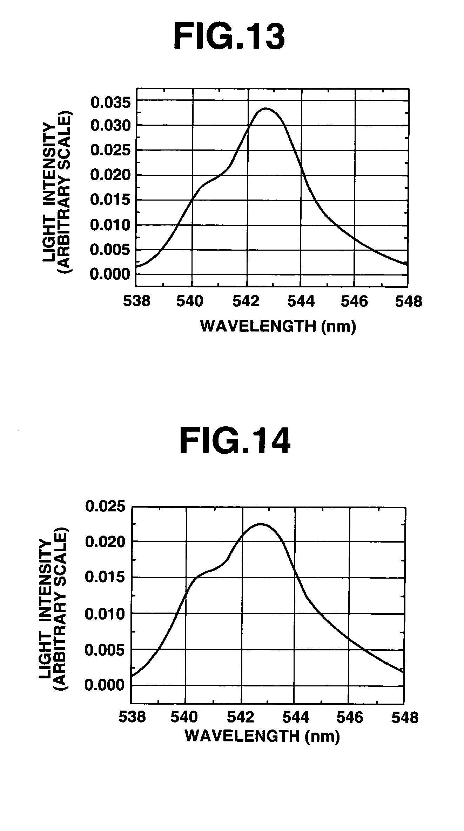

[Fig.13] an output light spectrum obtained in the embodiment 5 (reflectance = 25%)

[Fig.14] an output light spectrum obtained in the embodiment 5 (reflectance = 0%)

## DETAILED DESCRIPTION

The present invention can be used for, of course, communication system in a field of the optical communications, and also used for evaluation · measurement etc. as the light source in the application field of optical transmission. It is favorable to an imaging device, a medical light source and an analytic light source.

More specifically, the present invention is also used for signals for optical communications, a monitoring light source, a light source for an optical pathological examination system, an excitation light source of fluorescent dye such as tumor marker, a light source for an oral tissue observation instrument, an endoscope light source such as an optical fiber light source for surgery, an OCT light source for an optical tomography scanner, a light source for various optical microscopes such as a particulates observation microscope, a light source for an optical inspection device, a light source for an apparatus of color properties measurement of fluid, a light source for a microscopic foreign material inspection device, a light source for a filter inspection device, and an inspection light source for various sensors.

Furthermore, the present invention is also used as a light source required for a fluorescence display, a pointer, an optical memory, holography and so on.

Through the present invention, the output light whose coherence length is controlled can be provided without changing the transition element-doped optical waveguide in the light source device using the transition element-doped optical waveguide as the light emitter.

With regard to the first feature of the present invention, in order to solve the above problems, in the light source device using the transition element-doped optical waveguide as the light emitter, a light output end and an excitation light source to excite the transition element-doped optical waveguide are connected to one end of the transition element-doped optical waveguide through an optocoupler. And a reflector is connected to the other end of the transition element-doped optical waveguide through a variable attenuator. Since the variable attenuator is arranged between the transition element-doped optical waveguide and the reflector, a light power which returns to the transition element-doped optical waveguide from the reflector is controlled, and the full width at half maximum (FWHM) of the light spectrum of the output light is enlarged or reduced.

The optical waveguide mentioned here indicates an optical waveguide that has a core-clad structure, and indicates an optical waveguide where the core-clad structure is given to the optical fiber or on a substrate etc..

The coherence length is linked with the line width or the FWHM of the light spectrum, thus it becomes possible to control the coherence length by the control of the light spectrum.

In the following, the first feature of the present invention will be explained in detail with reference to the drawings 2~4.

Fig. 2 is a schematic diagram showing one embodiment of a light source device according to the first feature of the present invention. The light source device is formed from an excitation light source 101, an optocoupler 102, a transition element-doped optical waveguide 103, an output end 105, a reflector 201, and a variable attenuator 202.

Since the excitation light source 101 is the excitation light source for activating the transition element inside the transition element-doped optical waveguide 103, it is required that an excitation light source containing a proper wavelength be selected in accordance with transition element variations. For instance, a semiconductor laser, a fiber-coupled semiconductor laser, a semiconductor laser excitation solid-state laser, a semiconductor laser excitation fiber laser, a semiconductor laser excitation Raman laser, and these wavelength-conversion lasers, can be used. An isolator could be inserted between the excitation light source 101 and the optocoupler 102 as needed. Further, light whose excitation wavelength is formed from a plurality of wavelengths is also possible.

The optocoupler 102 is the optocoupler that leads excitation light which is output from the excitation light source 101 into the transition element-doped optical waveguide 103 and leads the light from the transition element-doped optical waveguide 103 to the output end 105. For instance, although there are optocouplers made by the melting and drawing and filter-type optocouplers, it is not limited to these structures as long as the optocoupler has functions mentioned above.

The transition element-doped optical waveguide 103 indicates an optical waveguide whose core part is doped with the transition element.

With respect to the doped transition element, one kind of element is possible, and a combination of a plurality of elements is also possible.

A base material forming the optical waveguide can employ any glass as long as it is possible to form the core-cladstructure,such assilica glass,fluoride glass, and chalcogenide glass, or glass formed by the sol-gel process.

The light used as the light source is output from the output end 105. A reflection reduction film could be provided at the output end 105 in order that the reflection light from the output end does not return to the transition element-doped optical waveguide 103. Or, an isolator could be provided between the optocoupler 102 and the output end 105 for the same purpose.

The reflector 201 could be a metal film or a dielectric multilayer as long as a part or all of the light produced in the transition element-doped optical waveguide 103 is reflected and returns to the transition element-doped optical waveguide 103.

Regarding the variable attenuator 202, any variable attenuator can be used as long as it provides a loss to the light from the transition element-doped optical waveguide 103 to the reflector 201, the light returning to the transition element-doped optical waveguide 103 from the reflector 201. The variable attenuator could be, of course, a commercial variable attenuator, attenuation by a bending loss of the fiber, a reflection filter using a dielectric multiple layers, a filter utilizing absorption of a substance, attenuation using knife edge, a means shifting an optical axis, and attenuation using a means rotating a reflection mirror etc..

Furthermore, with regard to the attenuation in the variable attenuator 202, negative attenuation, i.e. amplification is possible. For example, the variable attenuator 202 could employ an optical amplifier that has no isolator, and spectrum formation by adding can be also performed.

In addition, with respect to these optical components that form an optical circuit of the light source device, they are connected through the optical waveguide, and the optical fiber is preferable. In this case, if possible, to reduce a connection loss, it is desirable to unify the optical fiber used for the optical components and the optical fiber that connects them. Being a single mode is ideal for the light produced in the transition element-doped optical waveguide 103 as these optical fibers. However, if they are impossible due to circumstances, it is desirable to design so that only as low a mode as possible is permitted.

Or, it is possible that the optical waveguide is not used for the connection of these optical components that form the optical circuit of the light source device, and the optical components could be directly connected or could be connected through space.

Moreover, for example, in a case of iron group element of the transition element, although light emission wavelength etc. are greatly influenced by material or a ligand field of host, since such influence is relatively small in a case of the rare earth element, the rare earth element is preferable.

With regard to the second feature of the present invention, in order to solve the problems mentioned above, in the light source device using the transition element-doped optical waveguide as the light emitter, a light output end and an excitation light source to excite the transition element-doped optical waveguide are connected to one end of the transition element-doped optical waveguide through an optocoupler. And a reflector is connected to the other end of the transition element-doped optical waveguide. The reflector is placed to design the reflection spectrum significantly. An output light is a mixed light of a light that is directly output from the one end of the transition element-doped optical waveguide and a light that is a part of light output from the other end of the transition element-doped optical waveguide, which is reflected and returns at the reflector and comes out through the transition element-doped optical waveguide. When the light emitter in the transition element-doped optical waveguide is sufficiently excited and an optical loss in this optical circuit is sufficiently small, a power of the light that is reflected at the reflector and returns to the transition element-doped optical waveguide then comes out through this transition element-doped optical waveguide becomes stronger than a power of the light that is directly output from the transition element-doped optical waveguide. Therefore, a shape of reflection spectrum of the reflector is reflected in a light spectrum of the output light. As a result, the FWHM of the light spectrum of the output light is enlarged or reduced.

The optical waveguide mentioned here indicates an optical waveguide that has a core-clad structure, and indicates an optical waveguide where the core-clad structure is given to the optical fiber or on a substrate etc..

The coherence length is linked with the line width or the FWHM of the light spectrum, thus it becomes possible to control the coherence length by the control of the light spectrum.

In the following, the second feature of the present invention will be explained in detail with reference to the drawings 5~14.

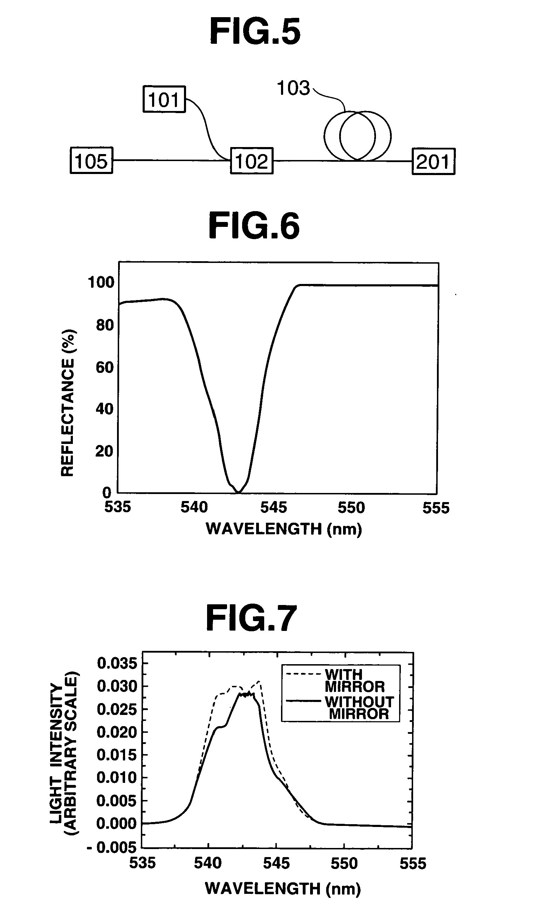

Fig. 5 is a schematic diagram showing one embodiment of a light source device according to the second feature of the present invention. The light source device is formed from an excitation light source 101, an optocoupler 102, a transition element-doped optical waveguide 103, an output end 105, and a reflector 201. With respect to the excitation light source 101, the optocoupler 102, the transition element-doped optical waveguide 103 and the output end 105 of these members, the detailed explanation described in the first feature of the present invention can be applied to them. Thus, the detailed explanation about these members will be omitted in the following description.

Regarding the second feature of the present invention, it is required that the reflector 201 be formed so that a reflection spectrum in which a reflectance is different depending on the wavelength is designed in a target wavelength band and it can take effect. For the sake of this, the reflector 201 is formed from the metal film or absorption materials, or formed by one or a plurality of fiber Bragg grating (FBG), or formed by a reflection film including reflection dielectric multiple layers. It is best to form the reflector 201 from the reflection film including dielectric multiple layers because the design of the reflection spectrum is especially easy.

For the formation of the output light spectrum, it is desirable that a difference between a maximum reflectance and a minimum reflectance of the reflection spectrum of the reflector 201 should be large. Therefore, it is desirable that a wavelength bandwidth of the reflection spectrum in the target wavelength band should be greater than or equal to 1nm, and it is desirable that the difference between the maximum reflectance and the minimum reflectance should be greater than or equal to 6%, and also a reflector whose maximum reflectance is 7 ~ 100% is desirable.

A case where the wavelength bandwidth of the reflection spectrum is less than 1nm is not desirable because the reflectance of the light spectrum cannot be accurately measured by resolution of a commercial light spectrum analyzer and there is a need to prepare a remarkably sophisticated measurement system.

In a case where the difference between the maximum reflectance and the minimum reflectance in the target wavelength band is small, practically, the formation of the spectrum is difficult. And in a case where the difference between the maximum reflectance and the minimum reflectance is less than 6%, a desired shape of the spectrum is not formed.

Furthermore, in a case where the maximum reflectance is low, the light cannot return and the formation of the spectrum shape becomes difficult. Although it depends on a gain coefficient of the transition element-doped optical waveguide, especially in a case where the maximum reflectance is less than 7%, it tends to be difficult.

When enlarging the FWHM of the light spectrum of the output light, the reflector is selected so that the reflectance of the reflector is decreased for a strongly output wavelength and the reflectance of the reflector is increased for a weakly output light in the light spectrum output from the transition element-doped optical waveguide 103. Further, when narrowing the FWHM of the light spectrum of the output light, the reflector is selected so that the reflectance of the reflector is increased for the strongly output wavelength and the reflectance of the reflector is decreased for the weakly output light in the light spectrum output from the transition element-doped optical waveguide 103.

As a setting way of the reflector 201, there are some ways, such as a way in which the reflection film is formed at an end face of the optical fiber that is connected to the transition element-doped optical waveguide 103, a way in which the reflection film is directly formed at an end face of the transition element-doped optical waveguide 103, a way in which the reflector is set at the end face of the optical fiber connected to the transition element-doped optical waveguide 103 or at the end face of the transition element-doped optical waveguide 103, and a way in which the reflector faces the end face of the optical fiber connected to the transition element-doped optical waveguide 103 or faces the end face of the transition element-doped optical waveguide 103, through a lens.

However, the setting way is not limited to these ways as long as a function of reflecting a part of the light from the transition element-doped optical waveguide 103 by the reflector and returning it to the transition element-doped optical waveguide 103 is secured. In addition, it is also possible to use a plurality of reflectors.

Further, although a band in a range of wavelength 300nm ~ 1200nm is a characteristic of the target wavelength band, also in a case of light except this wavelength band, the same performance can be made as long as the optical components forming the present invention and the doped transition element are properly selected.

With respect to these optical components that form the optical circuit of the light source device, they are connected through the optical waveguide, and the optical fiber is preferable. In particular, a step index optical fiber is preferable for the light output end. Additionally, if possible, to reduce the connection loss, it is desirable to unify types of the optical fiber used for the optical components and the optical fiber that connects them. Being a single mode is ideal for the target light as these optical fibers. However, if they are impossible due to circumstances, it is desirable to design so that only as low a mode as possible is permitted. Since presence of a plurality of modes makes the control of the coherence difficult, when controlling the coherence, like the control of the present invention, the mode has to be limited. More specifically, it is desirable that a V-number should be smaller than or equal to 3.832 for the target light. It is highly desirable that it should be smaller than or equal to 2.405.

In the following, the present invention will be explained by citing embodiments. An embodiment 1 corresponds to the first feature of the present invention. Embodiments 2 ~ 5 correspond to the second feature of the present invention. A comparative example 1 is an example that contrasts with the embodiment 2.

Embodiment 1

Fig. 2 is a schematic diagram showing one embodiment of a light source device according to the first feature of the present invention. The light source device is formed from an excitation light source 101, an optocoupler 102, a transition element-doped optical waveguide 103, an output end 105, a reflector 201, and a variable attenuator 202.

Asthetransitionelement-dopedopticalwaveguide 103, an erbium-doped fluoride optical fiber was used. Here, in order to obtain light of 550nm band of $Er^{3+}$, this fiber was used. An $Er^{3+}$ concentration was 5000 ppm, a length was 110cm.

As the excitation light source 101, a semiconductor laser of a wavelength 974nm, made by Bookham, was used.

As the optocoupler 102, a melted-drawn type optocoupler capable of the coupling and branching of the excitation light emitted from the excitation light source 101 and the light emitted from the transition element-doped optical waveguide 103 which is activated by the excitation light, was used.

As the reflector 201, a reflection mirror employing the dielectric multiple layers that have a reflection spectrum, as shown in Fig. 3, was used.

As the variable attenuator 202, as shown in Fig. 4, a means in which optical fibers 301, which are optical paths, are placed on opposite sides of a variable transmission filter 303 and attenuation of a collimated light by lens 302 is controlled by the variable transmission filter 303, was employed.

The excitation light output from the excitation light source 101 activates the erbium inside the erbium-doped fluoride optical fiber that is the transition element-doped optical waveguide 103, and the sufficiently excited erbium-doped fluoride optical fiber emits a fluorescence of 543nm. Although this fluorescence is basically emitted without directivity, through the core-clad structure of the transition element-doped optical waveguide 103, the fluorescence propagates through the core of the erbium-doped fluoride optical fiber and travels in directions of the optocoupler 102 and the reflector 201 in Fig. 2. The light traveling in the direction of the optocoupler 102 propagates up to the output end 105, then is output. This light is the ASE light in which a part of light is amplified. On the other hand, the light traveling in the direction of the reflector 201 is attenuated by the variable attenuator 202 and returns at the reflector 201, and further is input into the variable attenuator 202 and is attenuated, and then is input into the erbium-doped fluoride optical fiber that is the transition element-doped optical waveguide 103. The light returning at the reflector 201 and attenuated at the variable attenuator 202 is amplified by the erbium-doped fluoride optical fiber. The light directly output in the direction of the optocoupler 102 from the erbium-doped fluoride optical fiber and the light returning at the reflector 201 and attenuated at the variable attenuator 202 are mixed at the optocoupler 102, then is output from the output end 105.

The output lights when employing the excitation light whose output is 400mW and setting decrements of the variable attenuator 202 to 0%, 50% and 75%, were respectively measured by a light spectrum analyzer AQ-6315 made by Ando Electric Co,. Ltd.. Measured FWHMs and coherence lengths that are calculated from these values are shown in table 1. It was verified that the respective FWHMs were 2.63nm, 4.19nm and 4.85nm. Further, the coherence lengths calculated from the measurement FWHM were 111$\mu$m, 70$\mu$m and 61$\mu$m respectively, and the coherence length were able to be controlled by controlling the decrement of the variable attenuator 202.

[Table 1]

| Decrement of Variable Attenuator (%) | FWHM (nm) | Coherence Length ($\mu$m) |
|---|---|---|
| 0 | 2.63 | 111 |
| 50 | 4.19 | 70 |
| 75 | 4.85 | 61 |

Embodiment 2

Fig. 5 is a schematic diagram showing one embodiment of a light source device according to the present invention. The present embodiment was performed in the same configuration as Fig. 5. The light source device is formed from an excitation light source 101, an optocoupler 102, a transition element-doped optical waveguide 103, an output end 105, and a reflector 201. As the transition element-doped optical waveguide 103, an erbium-doped fluoride optical fiber was used. Here, in order to obtain light of 543nm band of $Er^{3+}$, this fiber was used. An $Er^{3+}$ concentration was 5000 ppm, a length was 110cm.

As the excitation light source 101, a semiconductor laser of a wavelength 974nm, made by Bookham, was used.

As the optocoupler 102, a melted-drawn type optocoupler capable of the coupling and branching of the excitation light emitted from the excitation light source 101 and the light of a target wavelength band, emitted from the transition element-doped optical waveguide 103 which is activated by the excitation light, was used.

As the reflector 201, a reflector having the dielectric multiple layers which are provided at the end face of the fiber for enlarging the FWHM of the output light spectrum, was used. A reflection spectrum of this film is shown in Fig. 6. This reflection spectrum is designed on the basis of the spectrum of the output light, and the reflectance of the reflector 201 is low for a strongly output wavelength and the reflectance of the reflector 201 is high for a weakly output wavelength.

The optical components used in the embodiment were connected through a silica optical fiber whose V-number is 3.00 for the light of 543nm.

The excitation light output from the excitation light source 101 activates the erbium inside the erbium-doped fluoride optical fiber that is the transition element-doped optical waveguide 103, and the sufficiently excited erbium-doped fluoride optical fiber emits a fluorescence of 543nm. Although this fluorescence is basically emitted without directivity, through the core-clad structure of the transition element-doped optical waveguide 103, the fluorescence propagates through the core of the erbium-doped fluoride optical fiber and travels in directions of the optocoupler 102 and the reflector 201 shown in Fig. 5. The light traveling in the direction of the optocoupler 102 propagates up to the output end 105, then is output. This light is the ASE light in which a part of light is amplified. On the other hand, the light traveling in the direction of the reflector 201 returns at the reflector 201. At this time, since the spectrum of the reflectance is not uniform, in this case, the light passes through without returning for a wavelength corresponding to a fluorescence peak, and the light strongly returns for the foot of the peak. With this, the FWHM of the light spectrum after returning is enlarged more than the light before returning. The light returning at the reflector 201 is amplified by stimulated emission when passing through the transition element-doped optical waveguide 103. This light is also the ASE light, and the light directly output in the direction of the optocoupler 102 from the transition element-doped optical waveguide 103 and the light returning at the reflector 201 are mixed and output from the output end 105.

The output light when employing the excitation light whose output is 400mW was measured by the light spectrum analyzer AQ-6315 made by Ando Electric Co, . Ltd.. Measured output light spectrum is shown in Fig. 7. Further, an FWHM obtained from the measured light spectrum and a coherence length calculated from this value are shown in table 2.

(Comparative Example 1)

A configuration of a comparative example 1 is completely the same as the embodiment 2, except that the reflector of the embodiment 2 is removed and a nonreflective end is provided. Output light spectra obtained in this case are shown in Figs. 7, 8B and 9. Further, an FWHM obtained from the measured light spectrum and a coherence length calculated from this value are shown in table 2.

The FWHM of the output spectrum of the embodiment 2 became wider than the comparative example 1, and the calculated coherence length became shorter by about 5 micrometer.

[Table 2]

| Evaluation Items | Embodiment 2 | Comparative Example 1 |
|---|---|---|
| FWHM (nm) | 5.09 | 4.70 |
| Coherence Length ($\mu$m) (calculation value) | 58 | 63 |

Embodiment 3

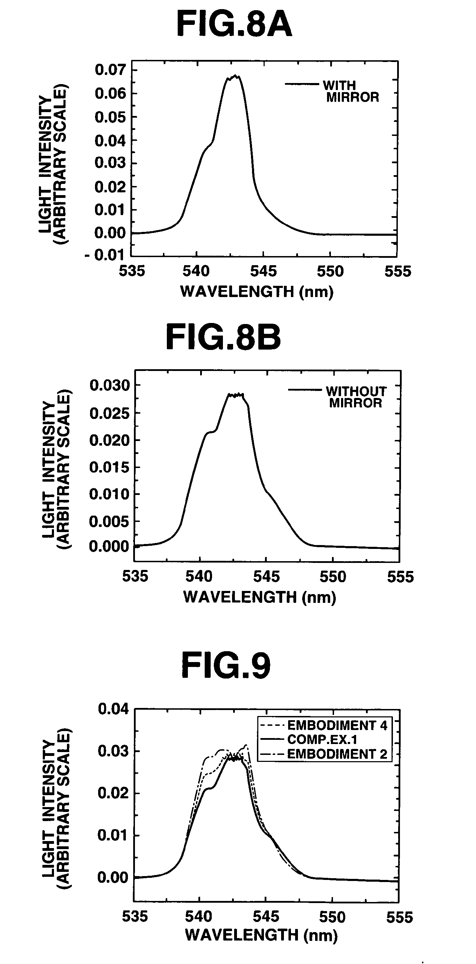

A configuration of an embodiment 3 is the same as the embodiment 2, except that the reflectance of the reflector of the embodiment 2 is 100% in a band of 535nm ~ 555nm. The output light spectrum obtained is shown in Fig. 8A. Further, an FWHM obtained from the measured light spectrum and a coherence length calculated from this value are shown in table 3 together with the result of the comparative example 1. The FWHM of the output light spectrum of the embodiment 3 became narrower than the comparative example 1, and the calculated coherence length became longer by about 19 micrometer.

[Table 3]

| Evaluation Items | Embodiment 3 | Comparative Example 1 |
|---|---|---|
| FWHM (nm) | 3.60 | 4.70 |
| Coherence Length ($\mu$m) (calculation value) | 82 | 63 |

Embodiment 4

A configuration of an embodiment 4 is the same as the embodiment 2, except that the difference between the maximum reflectance and the minimum reflectance is 60% and also the maximum reflectance is 60% in the reflection spectrum of the reflector of the embodiment 2. This reflector is a reflector that is designed for the sake of enlarging the FWHM. The output light spectrum obtained is shown in Fig. 9 together with the results obtained in the embodiment 2 and the comparative example 1. Further, an FWHM obtained from the measured light spectrum and a coherence length calculated from this value are shown in table 4 together with the result of the comparative example 1. The FWHM of the output light spectrum of the embodiment 4 became wider than the comparative example 1, and the calculated coherence length became shorter by about 4 micrometer. The FWHM of the output light spectrum were able to be enlarged almost the same as the embodiment 2.

[Table 4]

|  | Embodiment 4 | Comparative Example 1 |
|---|---|---|
| FWHM (nm) | 4.94 | 4.70 |
| Coherence Length ($\mu$m) (calculation value) | 59 | 63 |

As can be understood from these embodiments, by using a properly made reflector, it becomes possible to change the FWHM of the output light spectrum.

Embodiment 5

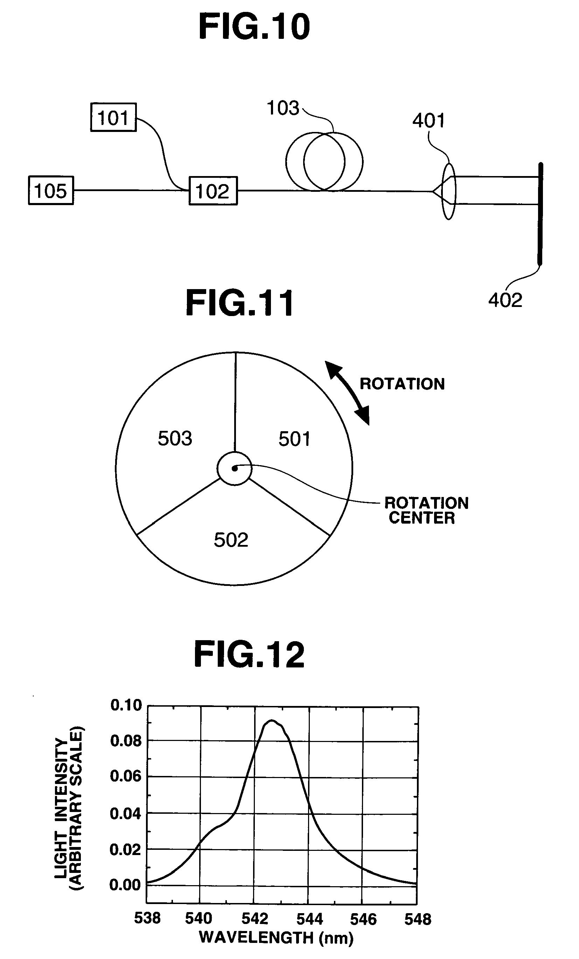

Fig. 10 is a structural diagram showing a light source device according to the present embodiment. The light source device is formed from an excitation light source 101, an optocoupler 102, a transition element-doped optical waveguide 103, an output end 105, a variable reflector 402, and a lens 401.

As the transition element-doped optical waveguide 103, an erbium-doped fluoride optical fiber was used. Here, in order to obtain light of 543nm band of $Er^{3+}$, this fiber was used. An $Er^{3+}$ concentration was 3000 ppm, a length was 200cm.

As the excitation light source 101 and the optocoupler 102, the same excitation light source and optocoupler as the emdobiment 2 were used.

With respect to the lens 401 here, it is a lens for the sake of obtaining a collimated light to obtain the reflection light with efficiency. As the lens, any single lens and any lens group formed from a plurality of lenses are possible.

The lens 401 and the variable reflector 402 have the function of varying the power of the light which returns to the transition element-doped optical waveguide 103. A fiber type device having the same function is also possible, and a configuration of the variable reflector 402 could be changed.

Fig. 11 is a structural diagram showing the variable reflector 402 used in the present embodiment. The variable reflector 402 used in the present embodiment is a variable reflector where a reflection mirror 501 of a reflectance 100%, a reflection mirror 502 of a reflectance 25%, and a reflection mirror 503 of a reflectance 0%, formed by the dielectric multiple layers, are arranged on a disk.

A structure in which the reflection mirrors radiated with the light from the transition element-doped optical waveguide 103 through the lens 401 are changed by rotating the variable reflector 402 and the reflectance is changed, is employed.

The output lights when employing the excitation light whose output is 400mW and setting the reflectance of the variable reflector 402 to 0%, 25% and 100%, were respectively measured by the light spectrum analyzer AQ-6315 made by Ando Electric Co,. Ltd.. Measured output light spectra are shown in Figs. 12 (the reflectance 100%), 13(the reflectance 25%) and 14(the reflectance 0%). Further, FWHMs obtained from the measured light spectra and coherence lengths calculated from these values are shown in table 5.

It becomes possible to change the FWHM at the place.

[Table 5]

| Reflectance (%) | FWHM (nm) | Coherence Length ($\mu$m) |
|---|---|---|
| 100 | 4.18 | 70.3 |

(continued)

| Reflectance (%) | FWHM (nm) | Coherence Length ($\mu$m) |
|---|---|---|
| 25 | 4.38 | 67.1 |
| 0 | 5.04 | 58.3 |

Also in the present embodiment, it is possible to change the spectrum shape, and consequently the coherence length were able to be changed.

In the output light from the output end 105, the light directly output from the transition element-doped optical waveguide 103 and the light which returns at the variable reflector 402 and passes through the transition element-doped optical waveguide 103 while being amplified then is output, are mixed. By changing the reflectance of the variable reflector 402, the power of the light which passes through the transition element-doped optical waveguide 103 while being amplified and is output, is changed. The power of the light passing through the transition element-doped optical waveguide 103 while being amplified is greater as compared with the light directly output from the transition element-doped optical waveguide 103. In addition, the FWHM of the amplified light is smaller as compared with the light directly output from the transition element-doped optical waveguide 103. As a consequence, it becomes possible to control the power of the light returning at the variable reflector 402 and passing through the transition element-doped optical waveguide 103 while being amplified and being output, and possible to control the FWHM of the output light, and therefore the coherence length were also able to be controlled.

**Claims**

1. A light source device using a transition element-doped optical waveguide as a light emitter, the light source device being **characterized in that** a light output end and an excitation light source to excite the transition element-doped optical waveguide are connected to one end of the transition element-doped optical waveguide through an optocoupler and a reflector is connected to the other end of the transition element-doped optical waveguide through a variable attenuator, thereby changing a coherence length of light that is output from the light output end.

2. The light source device as claimed in claim 1, wherein:

   the transition element is rare earth element.

3. A light source device using a transition element-doped optical waveguide as a light emitter, the light source device being **characterized in that** a light output end and an excitation light source to excite the transition element-doped optical waveguide are connected to one end of the transition element-doped optical waveguide through an optocoupler and a reflector is connected to the other end of the transition element-doped optical waveguide, thereby changing a shape of a light emission spectrum of the transition element-doped optical waveguide.

4. The light source device as claimed in claim 3, wherein:

   the reflector whose reflectance is different
   depending on a wavelength in a target wavelength band is used.

5. The light source device as claimed in claim 3 or 4, wherein:

   the reflector by which, a wavelength bandwidth of a reflection spectrum is greater than or equal to 1nm, a difference between a maximum reflectance and a minimum reflectance is greater than or equal to 6%, and the maximum reflectance is 7 ~ 100%, in the target wavelength band, is used.

6. The light source device as claimed in any one of the preceding claims 3 to 5, wherein:

   the target wavelength band is a band in a range of wavelength 300nm ~ 1200nm.

7. The light source device as claimed in any one of the preceding claims 3 to 6, wherein:

   the light output end is a step index optical fiber, and a V-number is smaller than or equal to 3.832 for the target light.

**8.** The light source device as claimed in any one of the preceding claims 3 to 7, wherein:

the transition element is rare earth element.

**9.** The light source device as claimed in any one of the preceding claims 3 to 8, wherein:

the reflectance of the reflector is variable.

# FIG.1

# FIG.2

# FIG.3

# FIG.4

# FIG.5

# FIG.6

# FIG.7

# FIG.8A

# FIG.8B

# FIG.9

14

# FIG.10

# FIG.11

# FIG.12

# FIG.13

# FIG.14

## INTERNATIONAL SEARCH REPORT

| International application No. |
| --- |
| PCT/JP2007/066723 |

A. CLASSIFICATION OF SUBJECT MATTER
*H01S3/10(2006.01)i*

According to International Patent Classification (IPC) or to both national classification and IPC

B. FIELDS SEARCHED

Minimum documentation searched (classification system followed by classification symbols)
H01S3/10

Documentation searched other than minimum documentation to the extent that such documents are included in the fields searched
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)
JSTPlus(JDream2)

C. DOCUMENTS CONSIDERED TO BE RELEVANT

| Category* | Citation of document, with indication, where appropriate, of the relevant passages | Relevant to claim No. |
| --- | --- | --- |
| Y | JP 7-066480 A (NEC Corp.), 10 March, 1995 (10.03.95), Par. Nos. [0017] to [0022], [0025]; Figs. 4, 5 (Family: none) | 1-9 |
| Y | JP 2003-174220 A (Nippon Telegraph And Telephone Corp.), 20 June, 2003 (20.06.03), Par. Nos. [0229] to [0232]; Fig. 29 & US 2002/131695 A1 & US 6900885 B2 & EP 1246324 A2 & EP 1246324 B1 | 1-9 |

☒ Further documents are listed in the continuation of Box C. ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 13 September, 2007 (13.09.07) | 02 October, 2007 (02.10.07) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| --- |
| PCT/JP2007/066723 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2001-111145 A (Kyocera Corp.),<br>20 April, 2001 (20.04.01),<br>Par. Nos. [0016] to [0022], [0034] to [0036];<br>Fig. 1<br>& JP 3921033 B2 & US 2001/046364 A1<br>& US 6658189 B2 | 1-9 |
| Y | JP 2004-144904 A (Nippon Telegraph And<br>Telephone Corp.),<br>20 May, 2004 (20.05.04),<br>Par. No. [0024]<br>(Family: none) | 4,9 |
| Y | JP 2004-528751 A (Xtellus Inc.),<br>16 September, 2004 (16.09.04),<br>Par. No. [0007]<br>& US 2004/126120 A1 & WO 2002/071660 A2<br>& EP 1371156 A2 | 4,9 |
| Y | JP 7-162062 A (Central Glass Co., Ltd.),<br>23 June, 1995 (23.06.95),<br>Par. No. [0014]<br>(Family: none) | 6 |
| Y | JP 9-086958 A (Mitsubishi Materials Corp.),<br>31 March, 1997 (31.03.97),<br>Par. No. [0017]<br>(Family: none) | 6 |
| A | JP 9-232661 A (Lucent Technologies Inc.),<br>05 September, 1997 (05.09.97),<br>Par. Nos. [0008] to [0024]; Fig. 1<br>& JP 3532373 B2 & US 5668821 A<br>& EP 785600 A2 & EP 785600 B1 | 1-9 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001189520 A
- JP 11312631 A
- JP 2001111145 A
- JP 2002329907 A
- JP 2003133621 A
- JP 3312930 B

**Non-patent literature cited in the description**

- **Hiroyoshi OTAKE.** The directions for Laser and the precautions. The Optronics Co., Ltd, 33
- **Michel J. F.** Digonnet, Rare-Earth-Doped Fiber Lasers and Amplifiers. Maecel Dekker, Inc, 18
- **Michel J. F.** Digonnet, Rare-Earth-Doped Fiber Lasers and Amplifiers. Maecel Dekker, Inc, 171-242